**Europäisches Patentamt**

**European Patent Office**

**Office européen des brevets**

(19)

(11) **EP 1 380 872 A2**

(12) **EUROPEAN PATENT APPLICATION**

(43) Date of publication:
**14.01.2004  Bulletin 2004/03**

(51) Int Cl.⁷: **G02B 13/18**, G02B 27/00, G02B 27/42

(21) Application number: **03015592.3**

(22) Date of filing: **14.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority:  **12.07.2002  CN 02133466**

(71) Applicant: **Chengdu Crystal Technology Co., Ltd.**
**W-Suburban Chengdu, Sichuan 611731 (CN)**

(72) Inventors:
 • **Zhang, Zhiquan, National Hi-Tech Development W-Suburban Chengdu, Sichuan 611731 (CN)**

 • **Xin, Qiming, National Hi-Tech Development W-Suburban Chengdu, Sichuan 611731 (CN)**
 • **Zhao, Rui, National Hi-Tech Development W-Suburban Chengdu, Sichuan 611731 (CN)**
 • **Gao, Feng, National Hi-Tech Development W-Suburban Chengdu, Sichuan 611731 (CN)**
 • **Chang, Wei National Hi-Tech Development W-Suburban Chengdu, Sichuan 611731 (CN)**

(74) Representative:
**Held, Stephan, Dipl.-Chem. Dr.rer.nat. et al Meissner, Bolte & Partner GbR,**
**Postfach 86 03 29**
**81630 München (DE)**

(54) **Projection system for use in image display apparatus**

(57)     An improved projection system uses a diffractive structure to provide improved image resolution. Display applications using red, green, and blue channel lenses to produce a full-color image use different diffractive structures to optimize color correction for each of the individual color bands. The preferred location of the diffractive structure is chosen near the aperture stop of the lens to minimize the range of ray incidence angles on the diffractive structure so that diffraction efficiency is maximized for the full field of view. Aspheric surfaces that have both even-power and odd-power terms are used throughout the design. The substantial improvement in image quality provided by the diffractive structure and the novel aspheric surfaces allows shorter object to image distances so that smaller-volume products are made possible.

FIGURE 10

**EP 1 380 872 A2**

**Description**

**BACKGROUND OF THE INVENTION**

**Field of the Invention**

The present invention generally relates to optical system, and more particularly, to projection system for use in image display apparatus.

**Description of the relates art**

Projection lenses for display applications have a lengthy history and are primarily employed in rear-projection television systems. Other display applications include desktop computer projectors for conferences or for teaching, and include visual flight simulation systems. Three projection lenses are most often used in combination to provide a red channel image, a green channel image, and a blue channel image for these display applications.
Projection lenses exhibit monochromatic aberrations (i.e. an aberration that is present even if only one color wavelength is used) and chromatic aberrations (i.e. an aberration that is caused by the presence of more than one color wavelength). The monochromatic aberrations include various orders of spherical aberration, coma, Petzval field curvature, astigmatism, and distortion. Axial chromatic aberration and lateral chromatic aberration are color wavelength dependent aberrations. In addition, the monochromatic aberrations can also change by small amounts as a function of the wavelength and produce sphero-chromatism or chromatic-astigmatism aberrations that are smaller than the monochromatic aberrations but still significant for the fast relative aperture and large field angles associated with projection lenses. The axial chromatic aberration is observed as a shift in best focus along the optical axis for an on-axis object point. The lateral chromatic aberration is observed as a change in magnification (i.e. a color blur) at the edge of the field. The lateral chromatic aberration is almost entirely corrected in display systems using red, green, and blue optical channels by electronically adjusting the format geometry in each color channel to obtain color convergence across the field of view. Therefore, axial chromatic aberration is the dominant residual aberration in projection lenses.
Correction of chromatic aberrations most often requires the use of flint-like materials. Flint-like materials have high dispersion of the refractive index as a function of wavelength, that is to say, the refractive index changes substantially as a function of wavelength. By comparison, Crown-like materials have low dispersion and their refractive index changes very little as a function of wavelength. The crown glasses such as Hoya BaC7 or China K9 are typical crown materials. Acrylic (PMMA) and Topas (COC) are typical plastic crown-like materials.
Prior art has taken advantage of two principles to make existing projection lenses simple and affordable: 1) The red and blue components of an image have much less impact on perceived image acuity than the green channel and can therefore have much lower resolution than the green channel. 2) The narrow color spectrum of the sources (which are most often CRTs) permits the lenses to have essentially no correction of axial chromatic aberration. Projection lenses in this category have image quality that is compatible with standard broadcast TV imagery where the object on the CRT is limited to 2 cy/mm or 3 cy/mm limiting resolution. This category of projection lens can use the same construction for each of the three different color channels and thereby minimize the manufacturing cost.
Projection lenses for high intensity display applications require a large relative aperture (i.e. an f/number faster than f/1.5) and a large angular field of view (typically larger than 60 degrees across the format diagonal). To achieve these design requirements requires at least four elements in the lens assembly. Higher image quality will require five elements in the lens assembly. When four elements are present in the design, the first element facing the projected image uses aspheric surfaces on an injection molded plastic material to correct the aperture related aberrations such as spherical aberration and coma. The second element in the four element lens design is glass and uses spherical surfaces; this element has almost all of the refractive power in the lens assembly so its surfaces are steeply curved, the center thickness is very large, and the element is therefore not suitable to be molded of plastic and must be made of glass. The third element from the projected image has aspheric surfaces on an injection molded plastic material to primarily correct the field related aberrations such as astigmatism. The fourth element from the projected image is a steeply concave injection molded shell that captures optical coupling fluid on the side closest to the object surface (which is most often a CRT). This fourth element and the coupling fluid combine with curvature of the object surface to correct for field curvature and distortion. When very fast relative apertures are required (e.g. f/1.05) it is common to add another injection molded plastic element with aspheric surfaces between the first and second elements of the four element design to achieve the typical five element lens design.
This arrangement of elements most often uses materials that have low chromatic dispersion (i.e. their Abbe number is large and the materials are called 'crown-like'). These materials minimize the amount of axial chromatic aberration that each element introduces to the image, but none of these elements has significant negative refractive power or an associated large chromatic dispersion, so none of the elements can correct for axial chromatic aberration introduced by any of the elements in the lens. The residual axial chromatic aberration of these prior art projection lenses limits the image resolution that can be achieved.

An example of the four-element projection lens design is U.S. Patent No. 5,255,122 issued to N. Konuma, et. al. in 1993.

Figure 1 shows an example of prior art projection lens with four elements (U.S. Patent No. 5,255,122). This lens operates at about 10x magnification from its Cathode Ray Tube (CRT) source to the projected image. This design is typical for display projection systems that use standard (NTSC) TV format where the resolution at the projection screen is typically 0.30 Ip/mm and at the CRT is about 3.0 Ip/mm. In this instance, the screen height is about 775 mm and there are 490 TV lines across the vertical field and two TV lines constitute a line pair (Ip). The screen limiting spatial frequency is therefore about (490)/(2)(775) = 0.3 Ip/mm. The horizontal resolution is nearly the same, so the projection system should maintain a high Modulation Transfer Frequency (MTF) value at this spatial frequency.

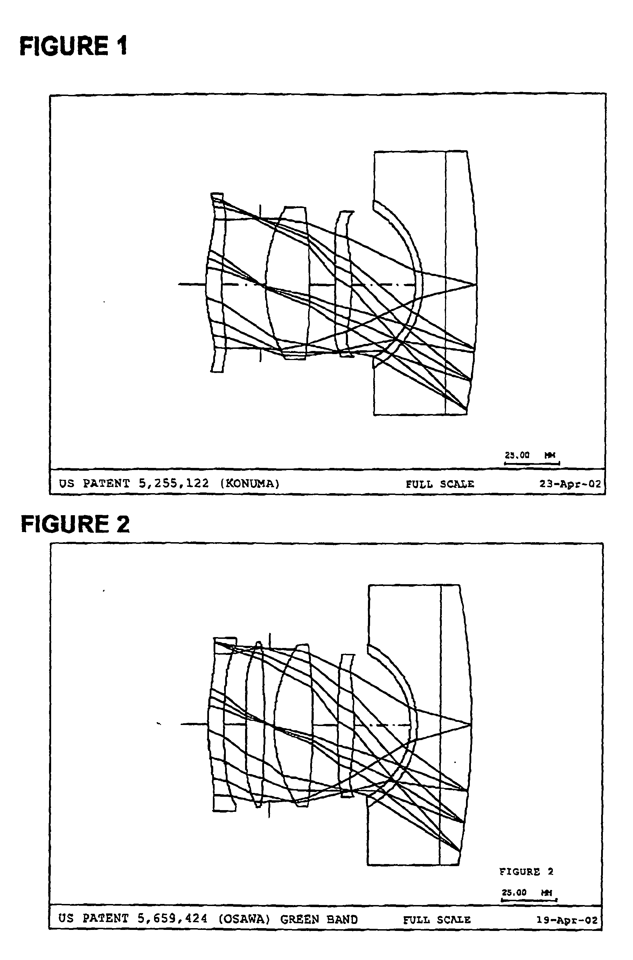

The design shown in Figure 1 operates with a red channel lens, a green channel lens, and a blue channel lens. Each of these lenses is presented a very narrow spectral band by its associated CRT, so the need for correction of axial chromatic aberration is minimal. It is possible for the designer to permit a lot of residual chromatic aberration while achieving acceptable MTF values at the low spatial frequencies noted above. Three elements are grouped as a subassembly in this design and the fourth element is immersed in a coupling fluid adjacent to the CRT faceplate. The fourth element, the coupling fluid, and the CRT faceplate operate as an optical element that strongly corrects the Petzval field curvature produced by the three elements in the subassembly. This is the simplest design form capable of meeting current broadcast TV image standards.

Display systems such as digitally enhanced TV have limiting object resolution on the order of 4 cy/mm and therefore require more complex projection lenses to deliver acceptable image quality. These lenses require a different construction for each of the three different color channels and typically use a larger number of glass or plastic elements that permit correction of axial chromatic aberration at a substantial increase in manufacturing cost.

Current TV formats take advantage of digital imagery, which can increase the number of lines across the vertical field and can increase the horizontal resolution, which is a function of the electronics system frequency bandpass. For digital or for enhanced TV systems, the limiting spatial frequency can be as high as 5 Ip/mm at the CRT, which is equivalent to about 0.5 Ip/mm at the projection screen. To achieve these higher resolution levels require correction of the axial chromatic aberration, and this correction in prior art designs has been achieved by adding elements which typically have negative power and strong spectral dispersion.

Examples of the five element projection lens design include U.S. Patent Nos. 5,157,554 issued to T. Kashihara in 1992, 5,357,373 issued to T. Yoshioka in 1994, 5,440,429 issued to D. Kim in 1995, 5,452,132 issued to D. Kim in 1995, 5,659,424 issued to A. Osawa in 1997, and 6,144,499 issued to A. Yokota in 2000.

Figure 2 shows a five-element design (U.S. Patent No. 5,659,424) that consists of four elements grouped in a subassembly plus a fifth element that is immersed in coupling fluid adjacent to the CRT faceplate. Again, the fifth element operates in concert with the coupling fluid and the CRT faceplate to strongly correct the Petzval field curvature introduced by the preceding four elements. This design form is often comprised of all crown-like materials so the axial chromatic aberration remains uncorrected and resolution is limited to the 3 Ip/mm class. Some variants of this form use polystyrene as the first element so the strong dispersion of the material plus the negative refractive power can provide partial correction of axial chromatic aberration and much higher resolution levels can be achieved. The use of polystyrene make the molding task much more difficult and this design is difficult to achieve in practice.

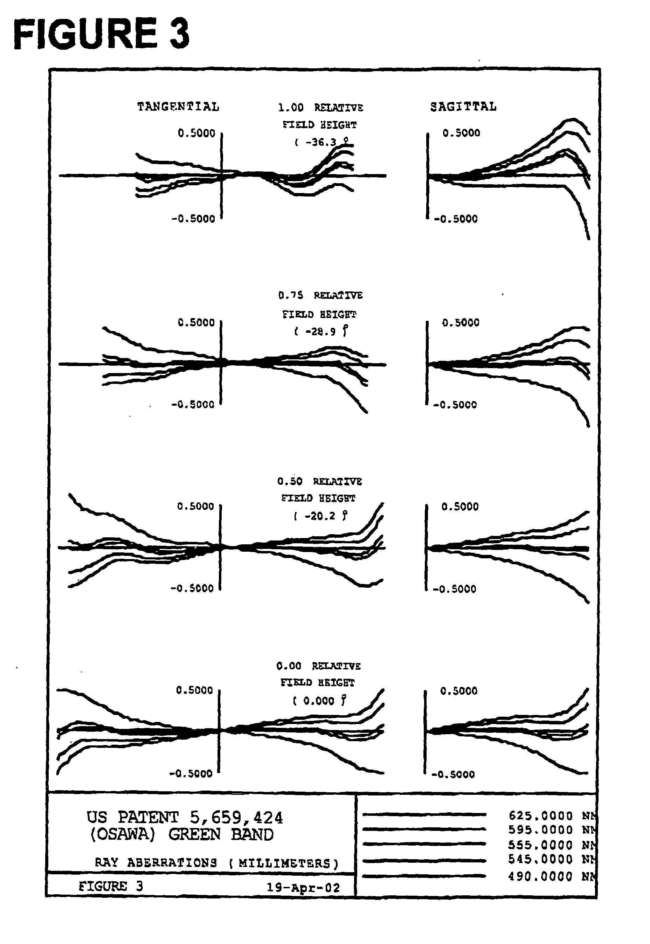

Figure 3 shows the ray aberration plots for the design of Figure 2 where the first element uses acrylic (PMMA) to maintain ease of molding at the expense of under-correction of the axial chromatic aberration. There are eight plots on this figure and the two plots at the bottom represent an object point on the optical axis. The bottom left plot shows the error in ray intercept height at the image surface as a function of the entrance pupil diameter. This plot has five different curves and each curve represents a different wavelength within the spectral band of the lens. A lens with no aberrations would have all five curves coincident with the horizontal axis of the plot. The fact that the five curves are tilted with respect to one another is a measure of the residual axial chromatic aberration in the lens.

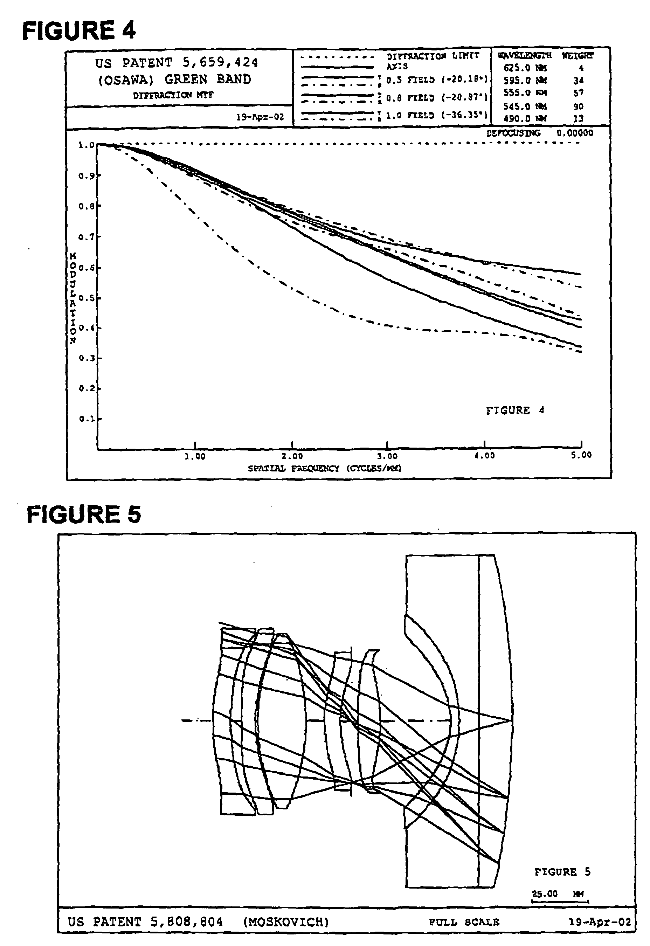

Figure 4 shows the MTF at the CRT surface for the design of Figure 2. The MTF is plotted as a function of the spatial frequency in Ip/mm (or cycles/mm). There is a black dashed line across the top of the plot and this is the MTF for a perfect (aberration-free) lens. There are seven more curves plotted. The first curve represents the MTF for an on axis object; only one curve is shown, because the two object orientations of vertical bars and horizontal bars has the same MTF for an on axis point. The remaining six curves consist of three field points across the field of view with two object orientations (horizontal bars and vertical bars). The MTF at 2 Ip/mm exceeds 0.75 except at the very corner of the format and the MTF at 5 Ip/mm exceeds 0.40 except at the very corner of the format. These MTF plots do not include the effects of manufacturing tolerances which can drop the MTF values by a factor of half for typical production environments, so as the manufactured lens is well suited for standard NTSC broadcast and can be used for some lower-end enhanced or digital TV applications.

Even greater resolution is required in some display systems, such as HDTV, where limiting resolution of 5 cy/mm to 7 cy/mm are required. Some display systems use a single projection lens for a multi-color object. These lens types become more complex in order to correct the axial chromatic aberration and achieve the higher resolution goals. Glass or plastic elements with strong negative refractive power and high dispersion materials are used to achieve the correction of axial chromatic aberration. US patent 5,808,804 and US patent 5,455,713 are examples of six element projection lens designs with improved axial chromatic aberration correction which yield higher image resolution. The use of plastic flint-like materials such as polystyrene or NAS introduce a very difficult molding problem and glass elements are often a more practical solution.

A six-element design is shown in Figure 5. This design uses polystyrene in the first element to partially correct axial chromatic aberration, plus an additional element to permit the lens to operate at shorter object to image distances. The polystyrene element is very difficult to mold and the larger number of elements makes for a very expensive product.

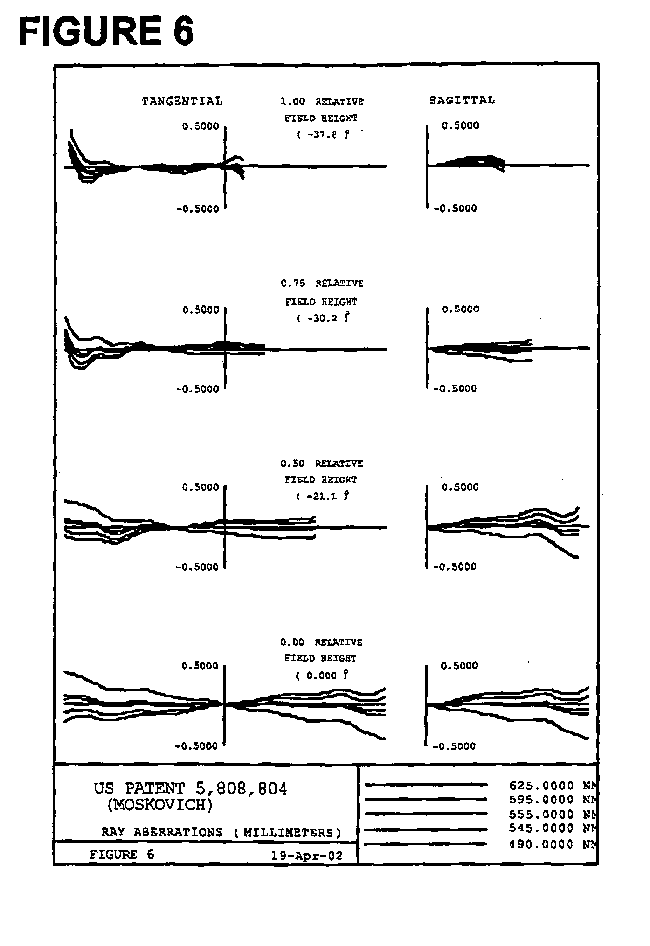

Figure 6 shows the ray aberration curves and comparison of the bottom left plot of Figure 6 to Figure 3 indicates a modest improvement in correction of the axial chromatic aberration. The weak refractive power of the polystyrene element prevents it from a more effective impact on controlling the chromatic aberration.

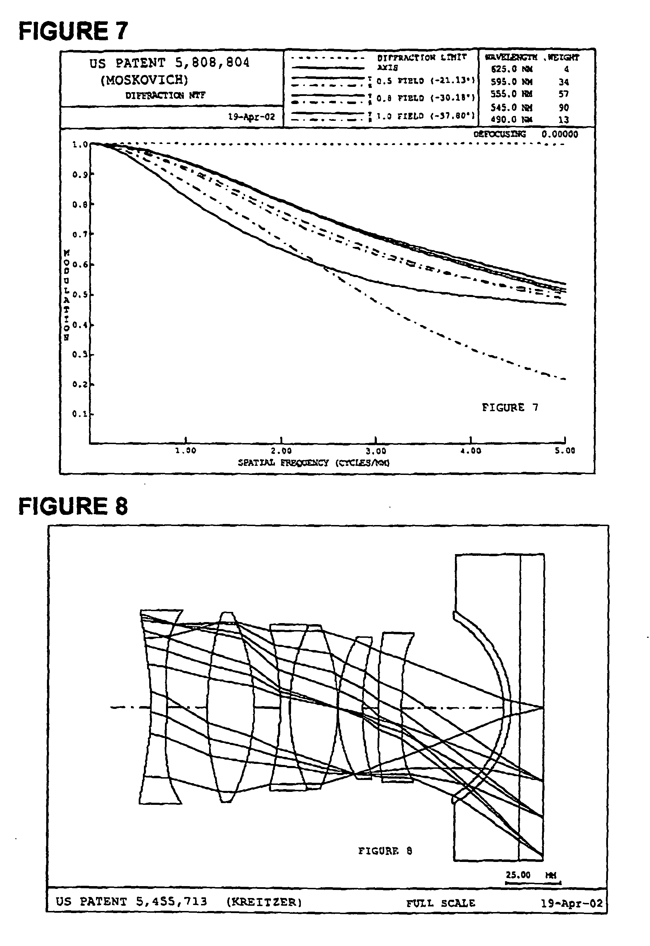

Figure 7 shows the MTF of the lens shown in Fig. 5. The MTF at 2 Ip/mm exceeds 0.80 except at the corner of the format and the MTF at 5 Ip/mm exceeds 0.50 except at the corner of the format. This improved MTF is attributable to the polystryrene element and the added element, but the cost makes this lens suitable only for very high-end products.

Figure 8 shows a seven-element design that uses three glass elements with spherical surfaces to completely correct the axial chromatic aberration and achieve extremely high image resolution. This lens is very expensive to produce and is suitable for HDTV applications, where the MTF values must remain high to a range from 5 Ip/mm to 7 Ip/mm.

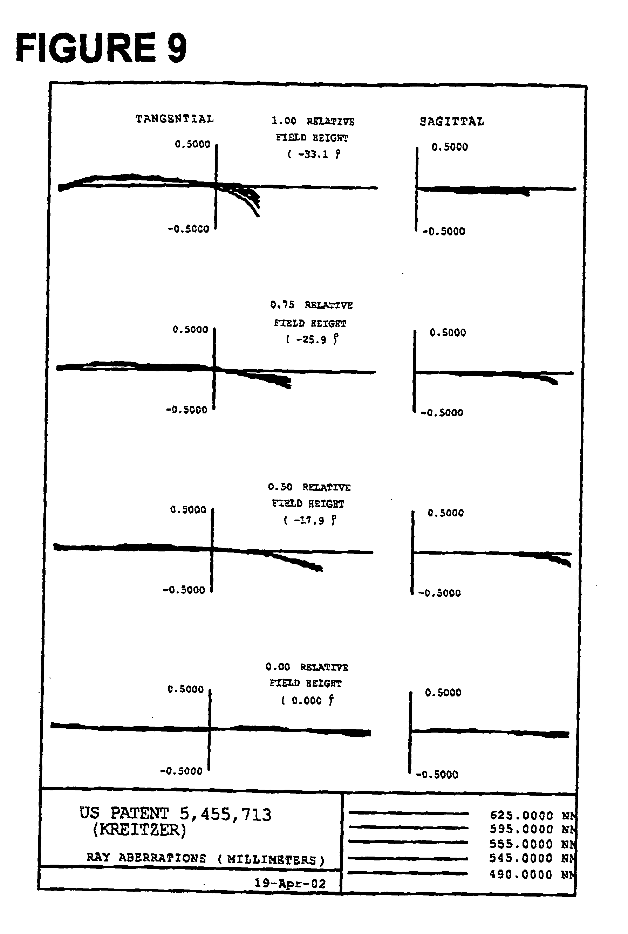

Figure 9 shows the ray aberration curves of the lens shown in Fig. 8, and the bottom left plot shows the five wavelengths superimposed because the axial chromatic aberration has been reduced to essentially zero.

Therefore, essentially all of the prior art for large display projection lens systems have under-corrected axial chromatic aberration to permit inexpensive and simple lens designs for modest image quality applications, or they have additional elements of flint-like material (most often glass) to correct axial chromatic aberration with expensive lens designs for high image quality applications.

## SUMMARY OF THE INVENTION

It is an object of the invention to provide a projection system with relative low cost, the projection system has considerably improved image resolution using the same number of elements as in prior art projection lens without employing flint-like glass or plastic materials.

It is another object of the invention to permit a shorter distance from object to image without compromising image resolution, in order that the display apparatus can be made smaller.

It is another object of the invention to increase the relative aperture of the projection system while providing improved image resolution without increasing the complexity of the lens system compared to prior art designs.

It is another object of the invention to employ three projection lenses operating together as a projection system employing only a different diffractive structure in each of the red, green, or blue lenses which provides improved image resolution with no increase in lens complexity or cost compared to lower resolution lenses currently representing the state-of-the-art.

It is another object of the invention to improve image resolution by the use of aspheric surfaces that have both even-power and odd-power terms.

The invention provides a projection system for use in image display apparatus, comprising a red channel projection lens, a green channel projection lens, and a blue channel projection lens, each of the projection lenses including a plurality of optical elements having at least one molded plastic element, wherein at least said one element of said projection lens has a diffractive structure for correcting chromatic aberrations associated with the spectral band associated with said projection lens.

The invention further provides a projection system for use in image display apparatus, comprising a red channel projection lens, a green channel projection lens, and a blue channel projection lens, each of the projection lenses including five optical elements, wherein at least said one element of said projection lens has a diffractive structure for correcting chromatic aberrations associated with the spectral band associated with said projection lens.

The invention further provides a projection system for use in image display apparatus, comprising a red channel projection lens, a green channel projection lens, and a blue channel projection lens, each of the projection lenses including a plurality of optical elements, wherein at least said one element of said projection lens has a diffractive structure for correcting chromatic aberrations associated with the spectral band associated with said projection lens, so that the distance from object to image of the image display apparatus can be reduced or the relative aperture of the image display apparatus can be increased without undue loss of image resolution.

The above objectives of the invention are satisfied by the improved projection lens concepts of this disclosure.

A diffractive structure is injection molded (or preferably injection-compression molded) onto one surface of an element in a projection lens assembly that has the same number of elements, the same complexity and the same manufacturing cost as a lower image quality projection lens that does not use a diffractive structure. The diffractive structure provides strong correction of axial chromatic aberration and this surface provides additional monochromatic aberration correction that is not present in the prior art projection lenses.

The diffractive structure and its strong aberration correction features yield substantially higher image resolution and some of this resolution can be traded off in favor of a shorter object to image distance that allows the display product to have a smaller volume and therefore lower system cost.

The diffractive structure and its strong aberration correction features also permit a faster relative aperture (f/number) than existing projection lenses without loss of image quality.

In addition, prior art lenses have widely used aspheric surfaces which are comprised of only the conic term and even-power terms in the surface-defining polynomial. The small number of terms in this polynomial form limits the rapidity with which the surface can change its local slope and this limits the degree of aberration correction possible from the surface. A new polynomial is used in this invention that is comprised of the conic term plus both the even-power terms and the odd-power terms. In order to retain symmetry about the optical axis, the new polynomial is defined for r > 0 (where r is the radial distance from the lens axis) and this curve is then rotated about the optical axis to create the surface of the element. The presence of the odd-powered terms permits more rapid changes in the local surface slope and this in term permits better aberration correction by the surface.

**BRIEF DESCRIPTION OF THE DRAWINGS**

The accompanying drawings, which are included to provide a further understanding of the invention and are incorporated in and constitute a part of this specification, illustrate embodiments of the invention and together with the description serve to explain the principles of the invention. In the drawings:

Figure 1 shows a projection lens using four elements of prior art;
Figure 2 shows a projection lens using five elements of prior art;
Figure 3 shows the ray aberrations of the five-element design of Figure 2;
Figure 4 shows the MTF of the five-element design of Figure 2;
Figure 5 shows another projection lens of prior art, which uses a negative plastic element comprised of a high dispersion material with total six elements to achieve improved control of axial chromatic aberration;
Figure 6 shows the ray aberrations of the six-element design of Figure 5;
Figure 7 shows the MTF of the six-element design of Figure 5;
Figure 8 shows another projection lens of prior art, which uses seven elements, wherein several elements are glass spherical forms to achieve improved control of axial chromatic abberration;
Figure 9 shows the ray aberrations of the seven-element design of Figure 8;
Figure 10 shows a projection lens according to a preferred embodiment of the present invention;
Figure 11 shows the ray aberrations of the projection lens shown in Figure 10 when optimized for the green channel optical path; and
Figure 12 shows the MTF of the projection lens shown in Figure 10 when optimized for the green channel optical path.

**DESCRIPTION OF THE PREFERRED EMBODIMENTS**

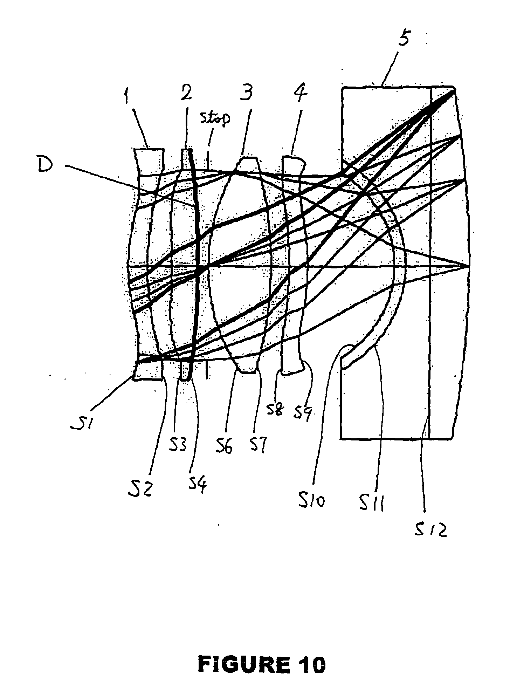

Figure 10 shows a projection lens according to a preferred embodiment of the projection system for use in image display apparatus of the present invention. The projection lens includes five optical elements, wherein a first element 1, a second element 2, a fourth element 4 and a fifth element 5 are made of molded acrylic (PMMA) and have aspheric surfaces; a third element 3 is made of a crown glass chosen for its low spectral dispersion, and most of the refractive power of the projection lens is provided by said third element 3. The aspherical surfaces are defined by following equation:

$$ASP = \frac{Cr^2}{1+\sqrt{1-(1+K)C^2r^2}} + AR3 * r^3 + AR4 * r^4 + \cdots + AR10 * r^{10} \tag{1}$$

Where ASP represents an aspherical surface; C represents reciprocal of the radius on the optical axis; K represents conic constant; r represents radial distance from the optical axis; AR3, AR4, ...AR10 are aspherical coefficients. A fourth surface S4 is superimposed with a diffractive structure D, its diffraction phase is $[2\pi/\lambda]*[C_1r^2 + C_2r^4$

+ $C_3r^6$], where $C_1$ represents second order coefficient; $C_2$ represents fourth order coefficient; $C_3$ represents sixth order coefficient; r is radial distance from the optical axis; and $\lambda$ is wavelength (mm). In this embodiment, $C_1$=4.44896E-4, $C_2$=-2.64265E-7 and $C_3$=1.02559E-10.

The lens data for this embodiment is shown in Table 1. The aspherical coefficients for the embodiment are shown in Table 2.

Table 1

| Surface | Surface Type | Radius(turn) | Thickness(mm) | Material | Conic Constant |
|---------|--------------|--------------|---------------|----------|----------------|
| Object | Plane | Infinity | 787.0384 | | 0.0000 |
| S1 | Aspherical | 66.4551 | 7.0000 | PMMA | -1.0000 |
| S2 | Aspherical | 122.7511 | 8.5357 | | -1.0000 |
| S3 | Aspherical | -292.4711 | 9.5000 | PMMA | -1.0000 |
| S4 | Aspherical | -329.8561 | 3.6388 | | 0.0000 |
| Stop | Plane | Infinity | 0.1000 | | 0.0000 |
| S6 | Spherical | 71.4300 | 23.0000 | K9 | 0.0000 |
| S7 | Spherical | -144.2113 | 6.8576 | | 0.0000 |
| S8 | Aspherical | -143.8802 | 7.0000 | PMMA | -1.0000 |
| S9 | Aspherical | -81.4431 | 32.2295 | | -1.0000 |
| S10 | Aspherical | -48,9074 | 4.0000 | PMMA | 0.0000 |
| S11 | Aspherical | -44.1737 | 9.0000 | 433500 | 0.0000 |
| S12 | Aspherical | Infinity | 14.1000 | 560500 | 0.0000 |
| Image | | -350.0000 | | | 0.0000 |

Table 2

| Surface | AR3 | AR4 | AR5 | AR6 | AR7 | AR8 | AR9 | AR10 |
|---|---|---|---|---|---|---|---|---|
| S1 | -3.6068E-5 | 6.8753E-7 | -4.4732E-8 | -2.9642E-9 | -2.1852E.12 | 1.6770E-12 | -7.7421E-15 | -1.1191E-16 |
| S2 | -6.4884E-5 | 4.7152E-6 | -2.2583E.7 | 8.7135E-10 | 1.8028E-11 | 7.0761E-13 | 1.2576E.13 | -3,2415E-15 |
| S3 | -3.2212E-5 | 6.7000E-6 | -2.8111E-7 | 5.5124E-9 | 1.3346E-10 | -3.6393E-12 | 1.1832E-15 | 0 |
| S8 | -6.5077E-6 | -1.5928E-6 | 1.8157E-8 | -8.6037E-10 | -9.8704E-11 | 3.6466E-12 | 0 | 2.1993E-16 |
| S9 | 2.4106E-5 | -1.3019E-6 | -7.0816E-8 | 1.1798E.8 | -5.5097E-10 | 9.8661E-12 | 0 | 0 |
| S10 | -2.6398E-4 | 3.2367E-5 | -2.5205E-6 | 1.2561E-7 | -4.0419E-9 | 7.7352E-11 | -6.5121E-13 | 0 |

Said diffractive structure D is integrally formed on fourth surface S4, in order to correct most of the axial chromatic aberration of the projection lens. The chromatic aberration could be further corrected to a smaller value than that in the preferred embodiment, but the minimum groove spacing on the diffractive structure has been intentionally limited to 25 microns to ensure good manufacturing processing and to minimize 'shadowing effect' of the groove structure and its attendant effect of stray light.

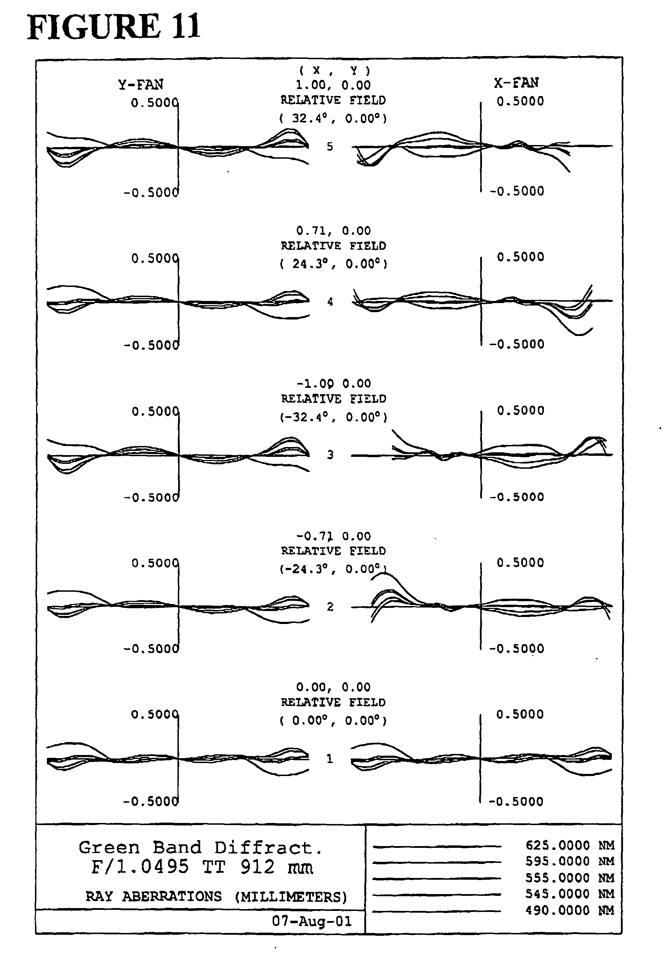

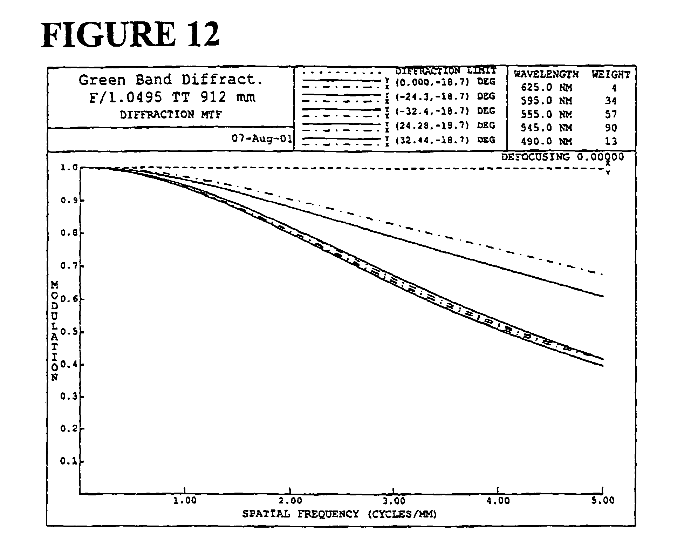

The ray aberration curves of the projection lens are shown in Figure 11 and compared to those of Figure 3 of prior art, it is apparent that substantial correction of the axial chromatic aberration has been achieved through the use of the diffractive structure. The MTF of the projection lens is shown in Figure 12. The MTF at 2 lp/mm exceeds 0.90 except at the extreme corner of the field, and the MTF at 5 lp/mm exceeds 0.60 except at the extreme corner of the field. These values can be compared to those in Figure 4 of prior art design.

The use of diffractive structure requires attention to several physical properties unique to diffractive surface. The wavefront passing through a diffractive structure can be focused into several different image locations in space, because the surface has same property as a diffraction grating, which can deliver energy into other diffraction orders than the one chosen to produce the image. The diffraction order chosen for the preferred image is typically the -1 order and unwanted energy can be delivered to the zero, +1, -2, and +2 orders if the groove depth is not properly designed and produced. The amount of energy delivered to a given order is called the diffraction efficiency for that order. The designer's goal is to maximize the diffraction efficiency of the -1 order and to minimize the diffraction efficiency of the other orders.

The type of diffractive structure chosen for the preferred embodiment of the projection lens is a 'true surface kinoform', wherein each groove has a curved section of the base curvature of the surface presented on it. This can be compared to a Kinoform that has a ramp on each groove that approximates the curved surface section and compared to a binary optical surface, which uses multiple steps to approximate the curved surface section. In theory, for a single wavelength and incident ray angle, the groove depth of a true Kinofonn can be chosen to give 100% diffraction efficiency for the -1 order and 0% diffraction efficiency for all other orders. Three factors will make the simple model complicated: 1) the spectral band is wider than one wavelength and the diffraction efficiency is weakly sensitive to wavelength; 2) the diffraction efficiency is very weakly sensitive to incidence angle and the preferred embodiment has incidence angles that vary from zero to +/-40 degrees; 3) the groove shape and depth is not perfect due to manufacturing tolerances and the diffraction efficiency is weakly sensitive to these tolerances.

The light that is directed into these unwanted orders causes two kinds of stray light effects that can reduce the perceived image quality. First, the light from an unwanted order can be focused into a blur near the desired image, so that bright objects can produce a very weak halo around the primary image. This effect is caused by the variation of the theoretical diffraction efficiency as a function of wavelength and incidence angle. Second, the light from scattering at the raised step region of the diffracting surface or manufacturing defects that degrade the shape of the surface can direct light over the full image surface to produce 'veiling glare' that looks like a very weak gray background on which the image is projected. This second effect reduces the image contrast.

The design of the preferred embodiment incorporates these features of diffractive structures. The spectral bandwidth of each CRT only allows a few percent of light to be delivered outside the preferred -1 order image. The incidence angle on the diffractive structure has been controlled to limit the unwanted background light to a few percent of the desired image brightness. The minimum groove width has been kept above 25 microns so the scatter at the step of the diffractive structure is kept to about 1.5% and the groove structure can be made with adequate precision by diamond turning operations and injection molding processes.

Therefore, the successful design incorporates both theoretical and practical factors to ensure maximum image resolution from a simple lens design with modest stray light artifacts.

It will be apparent to those skilled on the art that various modifications and variations can be made to the present invention without departing from the spirit or scope of the invention. It is intended that the present invention cover the modification and variations of this invention provided they come within the scope of the appended claims and their equivalents.

**Claims**

1. A projection system for use in image display apparatus, comprising a red channel projection lens, a green channel projection lens, and a blue channel projection lens, each of the projection lenses including a plurality of optical elements having at least one molded plastic element, wherein at least one element of said projection lens has a diffractive structure for correcting chromatic aberrations associated with the spectral band associated with said projection lens.

2. The projection system of Claim 1, wherein said diffractive structure is different for each projection lens, and disposed on the molded plastic element.

3. The projection system of Claim 2, wherein each of the red channel projection lens, the green channel projection lens and the blue channel projection lens includes same optical elements except for an optical element with said different diffractive structure.

4. The projection system of Claim 1, wherein one of the optical elements used in each of the red channel projection lens, the green channel projection lens, and the blue channel projection lens is an optical glass element with spherical surfaces, such that most of the refractive power of said projection lens is provided by the optical glass element, and the optical plastic elements all have very little refractive power to make themselves thin enough to be molded with adequate precision.

5. The projection system of Claim 4, wherein each of the red channel projection lens, the green channel projection lens and the blue channel projection lens includes same optical elements except for an optical element with different diffractive structure.

6. The projection system of Claim 5, wherein said diffractive structure is different for each projection lens, and disposed on a molded plastic element.

7. The projection system of Claim 5, wherein said projection lens includes aspheric surfaces, the aspheric surfaces are defined by a polynomial that is comprised of the conic term, even-powered terms and odd-powered terms, which permit more rapid changes in local surface slope to improve aberration correction.

8. The projection system of Claim 2, wherein said diffractive structure is a true surface kinoform.

9. A projection system for use in image display apparatus, comprising a red channel projection lens, a green channel projection lens, and a blue channel projection lens, each of the projection lenses including five optical elements, wherein at least one element of said projection lens has a diffractive structure for correcting chromatic aberrations associated with the spectral band associated with said projection lens.

10. The projection system of Claim 9, wherein a first element facing to the projected image is a molded plastic element, a second element is a molded plastic element, a third element is a glass element with spherical surfaces, a fourth element is a molded plastic element, and a fifth element is a molded plastic element.

11. The projection system of Claim 10, wherein a diffractive structure is disposed on one of the molded plastic elements.

12. The projection system of Claim 11, wherein a diffractive structure is disposed on the rear surface of the second element, so that a diffractive surface is a fourth surface from the projected image.

13. The projection system of Claim 12, wherein each of the red channel projection lens, the green channel projection lens, and the blue channel projection lens has same optical elements except for an optical element with different diffractive structure, such that the axial chromatic aberration of each spectral band is optimally corrected and maximum diffraction efficiency is achieved.

14. The projection system of Claim 13, wherein said projection lens includes aspheric surfaces, the aspheric surfaces are defined by a polynomial that is comprised of the conic term, even-powered terms and odd-powered terms, which permit more rapid changes in local surface slope to improve aberration correction.

15. The projection system of Claim 11, wherein said diffractive structure is a true surface kinoform.

16. A projection system for use in image display apparatus, comprising a red channel projection lens, a green channel projection lens, and a blue channel projection lens, each of the projection lenses including a plurality of optical elements, wherein at least said one element of said projection lens has a diffractive structure for correcting chromatic aberrations associated with the spectral band associated with said projection lens, so that the distance from object to image of the image display apparatus can be reduced or the relative aperture of the image display apparatus can be increased without undue loss of image resolution.

17. The projection system of Claim 16, wherein the projection lens includes five elements: a first element closest to the projected image comprised of a molded plastic material with aspheric surfaces, a second element comprised of a molded plastic material with aspheric surfaces, a third element comprised of optical glass with spherical surfaces, a fourth element comprised of a molded plastic material with aspheric surfaces, and a fifth element comprised of a molded plastic material with aspheric surfaces, wherein a different diffractive structure is disposed on one of the molded plastic elements.

18. The projection system of Claim 17, wherein said different diffractive structure is disposed on the fourth surface apart from the projected image, such that the diffractive structure provides optimal chromatic aberration and optimal diffraction efficiency for the projection lens with a specific color channel.

19. The projection system of Claim 18, wherein the aspheric surfaces are defined by a polynomial that is comprised of the conic term, even-powered terms and odd-powered terms that permit more rapid changes in local surface slope and consequently improved aberration correction.

## FIGURE 1

US PATENT 5,255,122 (KONUMA)        FULL SCALE        23-Apr-02

## FIGURE 2

FIGURE 2

US PATENT 5,659,424 (OSAWA) GREEN BAND        FULL SCALE        19-Apr-02

11

# FIGURE 3

TANGENTIAL     1.00 RELATIVE     SAGITTAL
FIELD HEIGHT
( -36.3 °

0.75 RELATIVE
FIELD HEIGHT
( -28.9 °

0.50 RELATIVE
FIELD HEIGHT
( -20.2 °

0.00 RELATIVE
FIELD HEIGHT
( 0.000 °

US PATENT 5,659,424
(OSAWA) GREEN BAND

RAY ABERRATIONS ( MILLIMETERS )

FIGURE 3     19-Apr-02

625.0000 NM
595.0000 NM
555.0000 NM
545.0000 NM
490.0000 NM

EP 1 380 872 A2

## FIGURE 4

US PATENT 5,659,424 (OSAWA) GREEN BAND — DIFFRACTION MTF — 19-Apr-02

FIGURE 4

## FIGURE 5

US PATENT 5,808,804 (MOSKOVICH)   FULL SCALE   19-Apr-02

FIGURE 5

13

# FIGURE 6

TANGENTIAL    1.00 RELATIVE    SAGITTAL

FIELD HEIGHT

( -37.8 )

0.5000    0.5000

-0.5000    -0.5000

0.75 RELATIVE

FIELD HEIGHT

( -30.2 )

0.5000    0.5000

-0.5000    -0.5000

0.50 RELATIVE

FIELD HEIGHT

( -21.1 )

0.5000    0.5000

-0.5000    -0.5000

0.00 RELATIVE

FIELD HEIGHT

( 0.000 )

0.5000    0.5000

-0.5000    -0.5000

US PATENT 5,808,804
(MOSKOVICH)

RAY ABERRATIONS ( MILLIMETERS )

FIGURE 6     19-Apr-02

625.0000 NM
595.0000 NM
555.0000 NM
545.0000 NM
490.0000 NM

# FIGURE 7

| US PATENT 5,808,804 (MOSKOVICH) DIFFRACTION MTF 19-Apr-02 | ······ DIFFRACTION LIMIT AXIS ——— 0.5 FIELD (-21.13°) —··— 0.8 FIELD (-30.18°) —·—· 1.0 FIELD (-37.80°) | WAVELENGTH WEIGHT 625.0 NM 4 595.0 NM 34 555.0 NM 57 545.0 NM 90 490.0 NM 13 |
|---|---|---|

DEFOCUSING 0.00000

FIGURE 7

# FIGURE 8

FIGURE 8

25.00 MM

US PATENT 5,455,713 (KREITZER)          FULL SCALE          19-Apr-02

EP 1 380 872 A2

# FIGURE 9

TANGENTIAL    1.00 RELATIVE    SAGITTAL
FIELD HEIGHT
( -33.1 )

0.75 RELATIVE
FIELD HEIGHT
( -25.9 )

0.50 RELATIVE
FIELD HEIGHT
( -17.9 )

0.00 RELATIVE
FIELD HEIGHT
( 0.000 )

US PATENT 5,455,713
(KREITZER)

RAY ABERRATIONS ( MILLIMETERS )

19-Apr-02

625.0000 NM
595.0000 NM
555.0000 NM
545.0000 NM
490.0000 NM

16

**FIGURE 10**

# FIGURE 11

# FIGURE 12